# EUROPEAN PATENT APPLICATION

(11) **EP 4 726 945 A1**
(43) Date of publication of application: **15.04.2026**
(21) Application number: 25206158.5
(22) Date of filing: 01.10.2025
(51) Int. Cl.: H02J 1/102, B64D 27/33, H02J 4/25, H02J 7/34

(54) **POWER SOURCE ASSEMBLY FOR ELECTRIC MACHINE**

(30) Priority: 08.10.2024 US 202418908947
(71) Applicant: GE Marmara Technology Center Muhendislik Hizmetleri Ltd, 41471 Gebze (TR); General Electric Deutschland Holding GmbH, 60313 Frankfurt (DE)
(72) Inventor: CENGELCI, Ekrem, 34880 Gebze (TR); SPAGNOLO, Cosimo, 85748 Garching (DE); OSAMA, Mohamed, 85748 Garching (DE)
(74) Representative: Openshaw & Co.

(57) **Abstract**

A power source assembly (200) includes a plurality of strings (208) electrically connectable to a load (204). Each of the plurality of strings includes a fuel cell module (210) and a DC/DC converter (212) electrically connected to the fuel cell module. Each of the plurality of strings is arranged in parallel to each other of the plurality of strings.

## Description

### FIELD

The present disclosure relates to a power source assembly for an aeronautical vehicle.

### BACKGROUND

Aeronautical vehicles use a variety of power sources to drive one or more propulsors that may generate thrust for the vehicles. Many vehicles use gas turbine engines, having a turbomachine and a rotor assembly. While gas turbine engines have advanced significantly over the years, it may be beneficial to examine inclusion of other power sources as a primary or secondary source of power for the vehicle. One such power source is an electric power source, such as a battery or a fuel cell.

### BRIEF DESCRIPTION OF THE DRAWINGS

A full and enabling disclosure of the present disclosure, including the best mode thereof, directed to one of ordinary skill in the art, is set forth in the specification, which makes reference to the appended figures, in which:
FIG. 1 is schematic, perspective view of an aeronautical vehicle in accordance with an aspect of the present disclosure.
FIG. 2 is a schematic, perspective view of a gas turbine engine in accordance with an aspect of the present disclosure.
FIG. 3 is a schematic, perspective view of an electric propulsor in accordance with an aspect of the present disclosure.
FIG. 4 is a schematic view of a fuel cell in accordance with an exemplary aspect of the present disclosure.
FIG. 5 is a schematic view of an exemplary power source assembly.
FIG. 6 is a schematic view of another exemplary power source assembly.
FIG. 7 is a schematic view of another exemplary power source assembly.
FIG. 8 is a schematic view of another exemplary power source assembly.
FIG. 9 is a schematic view of another exemplary power source assembly.
FIG. 10 is a schematic view of another exemplary power source assembly.
FIG. 11 is a chart illustrating load current and terminal voltage for the power source assemblies of FIG. 5-10.
FIG. 12 is schematic view of a controller in accordance with an exemplary aspect of the present disclosure.

### DETAILED DESCRIPTION

Reference will now be made in detail to present embodiments of the disclosure, one or more examples of which are illustrated in the accompanying drawings. The detailed description uses numerical and letter designations to refer to features in the drawings. Like or similar designations in the drawings and description have been used to refer to like or similar parts of the disclosure.

The word "exemplary" is used herein to mean "serving as an example, instance, or illustration." Any implementation described herein as "exemplary" is not necessarily to be construed as preferred or advantageous over other implementations. Additionally, unless specifically identified otherwise, all embodiments described herein should be considered exemplary.

The singular forms "a", "an", and "the" include plural references unless the context clearly dictates otherwise.

The term "at least one of" in the context of, e.g., "at least one of A, B, and C" refers to only A, only B, only C, or any combination of A, B, and C.

The phrases "from X to Y" and "between X and Y" each refers to a range of values inclusive of the endpoints (i.e., refers to a range of values that includes both X and Y).

The present disclosure is generally related to power management for an aeronautical vehicle. Fuel cell modules provide power for electric propulsors, and power output may vary depending on electrochemical reactions in the fuel cell modules. Specifically, components of fuel cell modules may have different time constants affected by reactant chemistry, thermal balance, and electrical output. Additionally, rapid increases and decreases of terminal voltage may prematurely age the fuel cell modules, reducing overall time on wing. Synchronizing outputs from several fuel cell modules with a few power converters may take several minutes and result in imbalances of reactant, thermal, and electrical parameters of the fuel cell modules if performed imprecisely.

By providing each of the fuel cell modules with a dedicated power converter in a string of an electric circuit, the fuel cell modules are decoupled from each other such that output from one of the fuel cell modules does not affect the other fuel cell modules. Moreover, each individual fuel cell module can gradually ramp up output, which reduces aging. In such a form, the fuel cell modules can provide the specified power output to the electric propulsor without disruption or interference from the other fuel cell modules.

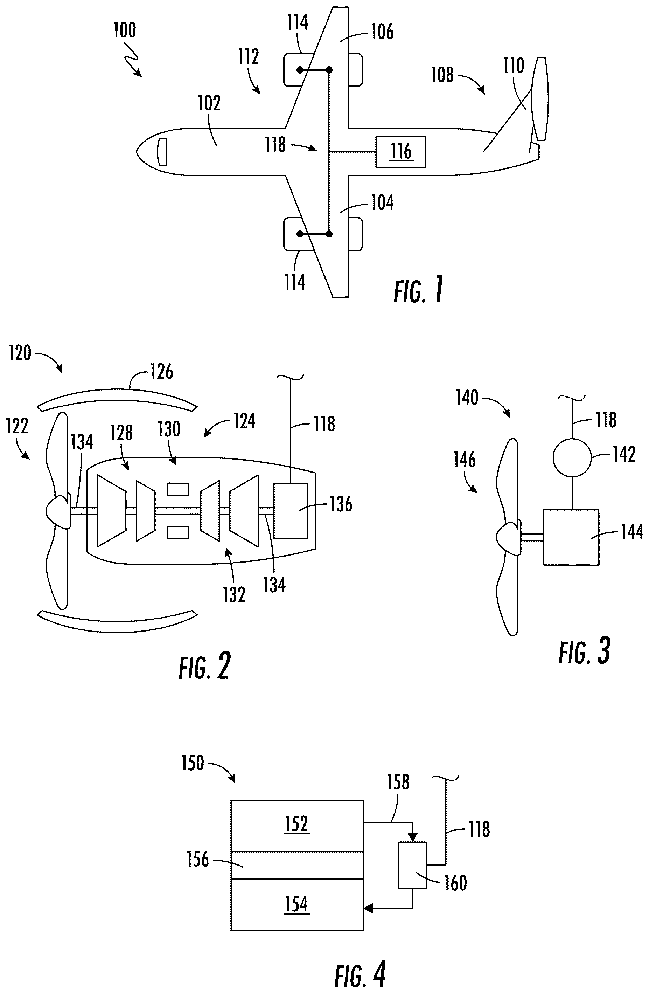

Referring now to the drawings, wherein identical numerals indicate the same elements throughout the figures, FIG. 1 is a schematic view of an aeronautical vehicle 100 in accordance with an exemplary embodiment of the present disclosure. The exemplary aeronautical vehicle 100 of FIG. 1 is configured as an aircraft. The aircraft generally includes a fuselage 102 forming a main body portion of the vehicle 100, a first wing 104 extending from a port side of the aircraft and a second wing 106 extending from a starboard side of the aircraft. The first and second wings 104, 106 each extend laterally from the fuselage 102. The aircraft further includes an empennage 108 having one or more stabilizer 110, and, in particular, including a vertical stabilizer and a horizontal stabilizer.

The vehicle 100 further includes a propulsion system 112 that includes one or more propulsors 114 and one or more power sources 116. The propulsion system 112 further includes an electric power distribution bus 118 electrical coupling various components of the propulsion system 112.

Referring now to FIG. 2, a schematic view of a propulsor as may be incorporated into the exemplary propulsion system 112 of the aeronautical vehicle 100 of FIG. 1 is provided. More specifically, for the embodiment depicted, the propulsor is configured as a gas turbine engine 120, and more specifically, still, the gas turbine engine 120 of FIG. 2 is configured as a turbofan engine. The turbofan engine includes a fan section 122 and a turbomachine 124 drivingly coupled to the fan section 122. The turbofan engine further includes an outer nacelle 126 enclosing at least in part the fan section 122 and the turbomachine 124. The turbomachine 124 generally includes a compressor section 128, a combustion section 130, and a turbine section 132 arranged in serial flow order, and one or more shafts 134 connecting, e.g., a fan of the fan section 122, one or more compressors of the compressor section 128, and one or more turbines of the turbine section 132. Moreover, for the embodiment of FIG. 2, the turbofan engine further includes an electric machine 136 rotatable with the one or more shafts 134 of the turbomachine 124, with the fan section 122, or both. The electric machine 136 may be configured to extract electrical power from the turbofan engine and provide such electrical power to an electric power distribution bus 118, such as the electric power distribution bus 118 of FIG. 1. Additionally, or alternatively, the electric machine 136 may be configured to receive electric power from the electric power distribution bus 118 to, e.g., drive the fan of the fan section 122.

Referring now to FIG. 3, a schematic view of a propulsor as may be incorporated into the exemplary propulsion system 112 of the aeronautical vehicle 100 of FIG. 1 in accordance with another exemplary aspect of the present disclosure is provided. For the embodiment of FIG. 3, the propulsor is configured as an electric fan 140. The electric fan 140 generally includes an inverter 142, an electric machine 144 (e.g., in the form of an electric motor), and a fan 146.

The inverter 142 is configured to receive electrical power from, e.g., an electric power distribution bus 118 (such as the electric power distribution bus 118 of FIG. 1) and convert the received electrical power from, e.g., a direct-current ("DC") electrical power to an alternating current ("AC") electrical power. The electric machine 144 is configured as an electric motor configured to receive the electric power from the inverter 142 and convert the electric power into a mechanical, rotational force to drive the fan 146 and generate thrust.

Referring now to FIG. 4, a power source is provided, which may be incorporated into the exemplary propulsion system 112 of the aeronautical vehicle 100 of FIG. 1 in accordance with an exemplary aspect of the present disclosure. The power source is more specifically a fuel cell 150. Fuel cells are electro-chemical devices which can convert chemical energy from a fuel into electrical energy through an electro-chemical reaction of the fuel, such as hydrogen, with an oxidizer, such as oxygen contained in the atmospheric air.

The fuel cell 150 of FIG. 4 includes an anode 152, a cathode 154, and an electrolyte layer 156 positioned between the anode 152 and the cathode 154. During operation, fuel, such as a hydrogen fuel, is provided to the anode 152 and an oxygen containing gas, such as air, is provided to the cathode 154. Within the anode 152, hydrogen molecules from the fuel may be separated into protons and electrons, with the electrolyte layer 156 allowing only protons to pass through to the cathode 154. The electrons travel through an external electrical circuit 158 which may be electrically coupled to an electric power distribution bus 118, such as the electric power distribution bus 118 of FIG. 1, through a juncture box 160 (including, e.g., various power electronics). At the cathode 154, protons, electrons, and oxygen are combined to form water as a byproduct.

As will be appreciated, the aeronautical vehicle 100 depicted in FIG. 1 is provided by way of example only, and, in other exemplary embodiments, aspects of the present disclosure may be incorporated into any other suitable aeronautical vehicle 100. Similarly, the propulsors depicted in FIGS. 1 through 3 are also provided by way of example only. In other exemplary embodiments, aspects of the present disclosure may be incorporated into, or otherwise utilized with, any other suitable propulsors, such as any other suitable gas turbine engines having an electric machine (e.g., other turbofan engines, open rotor turbofan engines, turboprop engines, turboshaft engines, turbojet engines), any other suitable electric fans (e.g., ducted fans, distributed fan, vertical thrust fans, horizontal thrust fans, combination fans), or the like.

Further, it will be appreciated that the fuel cell 150 depicted as the power source in FIG. 4 may be any suitable type of fuel cell. Further, although a single fuel cell is depicted in FIG. 4, it will be appreciated that, as used herein, the term "fuel cell" may refer to a single fuel cell or an array of fuel cells connected to one another for providing an electrical power output. In particular, as a single fuel cell may only be able to generate on the order of 1 volt voltage, a plurality of fuel cells may be stacked together (which may be referred to as a fuel cell stack). One or more fuel cell stacks may form a fuel cell module, and one or more fuel cell modules may form a fuel cell system to generate a desired voltage. Further, the fuel cell may be of any suitable chemistry. For example, the fuel cell 150 may include Solid Oxide Fuel Cells (SOFC), Molten Carbonate Fuel Cells (MCFC), Phosphoric Acid Fuel Cells (PAFC), and Proton Exchange Membrane Fuel Cells (PEMFC), all generally named after their respective electrolyte layers. Each of these fuel cells may have specific benefits in the form of a preferred operating temperature range, power generation capability, efficiency, etc.

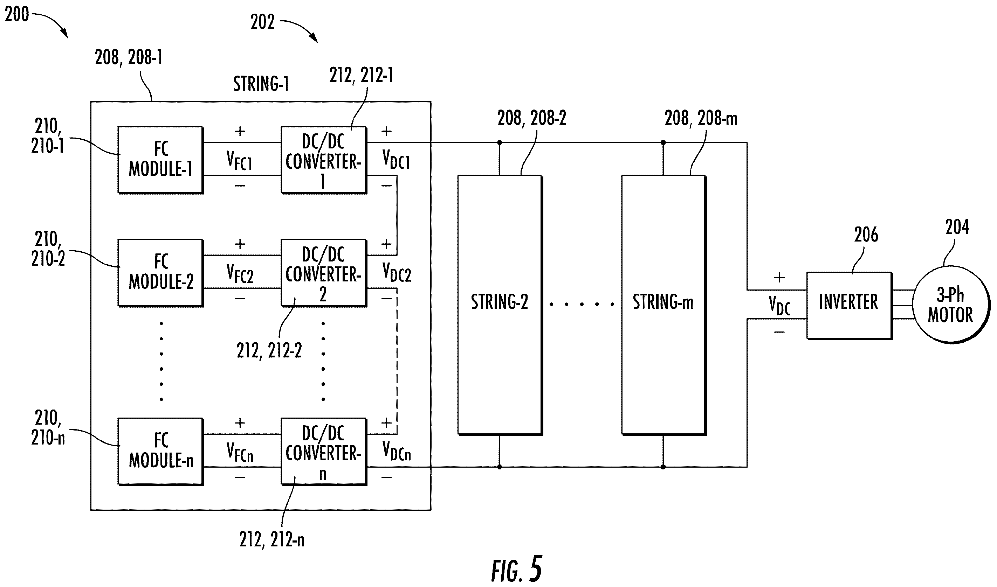

Now referring to FIG. 5, a schematic view of a system 200 for the aeronautical vehicle 100 is shown. The system 200 includes a power source assembly 202 and an electric machine 204. The exemplary system 200 of FIG. 5 may be integrated into one or more of the exemplary aeronautical vehicles described herein (see, e.g., the aeronautical vehicle 100 of FIG. 1), may be used with one or more of the propulsors described herein (see, e.g., FIGS. 2 and 3), and may utilize one or more of the exemplary power sources described herein (see, e.g., FIG. 4).

More specifically, FIG. 5 schematically depicts an electric circuit for the system 200. The electric machine 204 includes a plurality of windings connected to an inverter 206. In the example of FIG. 5, the electric machine 204 is a three-phase motor. The electric machine 204 demands power from the power source assembly 202 when in use. The electric machine 204 may be a motor/generator that outputs or inputs power based on needs of the aeronautical vehicle 100.

The power source assembly 202 includes a plurality of strings 208 and the inverter 206. In this context, a "string" is "a set of circuit modules interconnected electrically in series to produce a specified voltage." Each of the plurality of strings 208 is connectable to a load, specifically, to one of the windings of the electric machine 204 via the inverter 206. Each string 208 includes at least one fuel cell module 210 and at least one DC/DC converter 212 electrically connected to the fuel cell module 210. A "fuel cell module" is a module that includes one or more fuel cell stacks (which, in turn, may include a plurality fuel cells, such as a plurality of the fuel cells 150 of FIG. 4) and any additional components to provide power from the fuel cell stacks. The fuel cell module 210 provides power to the load via the DC/DC converter 212. Each string 208 may include a plurality of fuel cell modules 210 with corresponding DC/DC converters 212. By way of example, the system 200 includes *m* strings 208, and each string 208 may include *n* fuel cell modules 210 and *n* DC/DC converters 212, where *m* and *n* are natural numbers. Each string 208, fuel cell module 210, and DC/DC converter 212 is labeled with a number between 1 and *m* or *n*, such as a first string 208-1, a first fuel cell module 210-1, a second fuel cell module 210-2, and a first DC/DC converter 212-1. It will be appreciated that the system 200 can include a specific number *m, n* of strings 208, fuel cell modules 210, and DC/DC converters 212 based on the power demands of the electric machine 204. In particular, *m* and *n* may be the same number.

Each fuel cell module 210 is configured to provide a fuel cell module DC power output during, e.g., an operating condition of the power source assembly. In particular, each fuel cell module 210 is configured to provide a fuel cell voltage output and a fuel cell module current output during the operating condition of the power source assembly. Each fuel cell module 210 may be configured to generate a maximum power output of at least 100 kilowatts (kW) and up to 2,000 kW, such as from 200 kW to 1,200 kW.

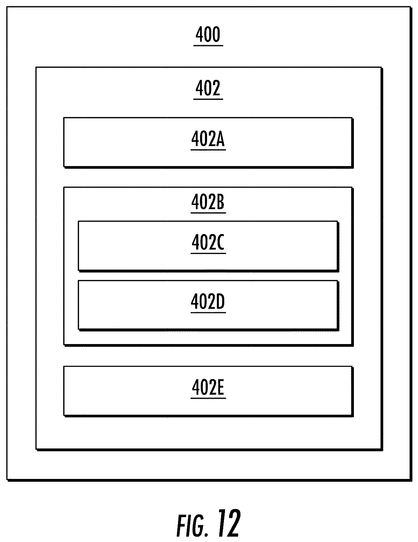

Each of the plurality of strings 208 is arranged in parallel to each other of the plurality of strings 208. By arranging the plurality of strings 208 in parallel, current from one of the fuel cell modules 210 does not adversely affect output from the other fuel cell modules 210. That is, separating the fuel cell modules 210 from each other in parallel with dedicated DC/DC converters 212 reduces interference from other fuel cell modules 210, improving output from the power source assembly 202. In particular, controlling output from each of the strings 208, such as with a controller (FIG. 12), provides current for the power needs of the load for use in the aeronautical vehicle 100. Exemplary power needs include increased electrical energy need for an electric propulsion system 112 during a takeoff or landing operation, which the fuel cell modules 210 may provide, or other changes in altitude.

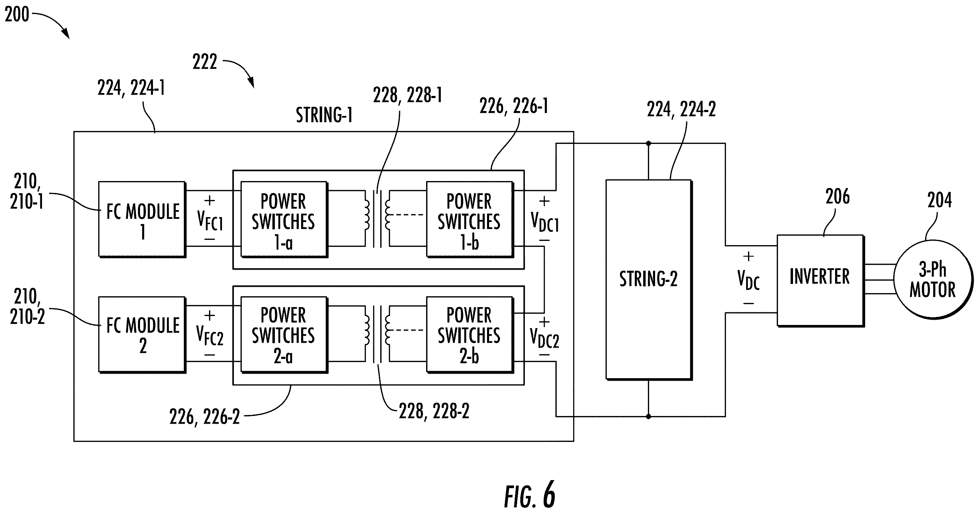

Now referring to FIG. 6, another exemplary system 220 with a power source assembly 222 is shown. Components that are similar throughout the FIGS. will have similar descriptions and share a similar numeral. For example, the system 220 of FIG. 6 includes an electric machine 204 and an inverter 206, which are similar in configuration to the electric machine 204 and the inverter 206 of the system 200 of FIG. 5.

The power source assembly 222 includes a plurality of strings 224. It will be appreciated that, while two strings 224-1, 224-2 are shown in FIG. 6, the power source assembly 222 can a different number of strings 224 (such as is shown in FIG. 5). The number of strings 224 can be included based on the power needs of the electric machine 204, such as an increased power need for the electric propulsion system 112 during takeoff or landing.

Each string 224 of the power source assembly 222 includes at least one isolated fuel cell module 210. The fuel cell module 210 is "isolated" when there is no direct electrical connection between the fuel cell module 210 and the inverter 206. Specifically, a DC/DC converter 226 includes a transformer 228. The transformer 228 is actuatable to allow or prevent electrical power from the fuel cell module 210 to the electric machine 204. Specifically, the transformer 228 of the DC/DC converter 226, when activated by a controller (FIG. 12), allows a voltage generated by the fuel cell module 210 to induce a current in the DC/DC converter 226, which provides power to the electric machine 204. By isolating at least one of the fuel cell modules 210, the transformers 228 reduce or inhibit current surges and shorts, which may affect output from the fuel cell modules 210.

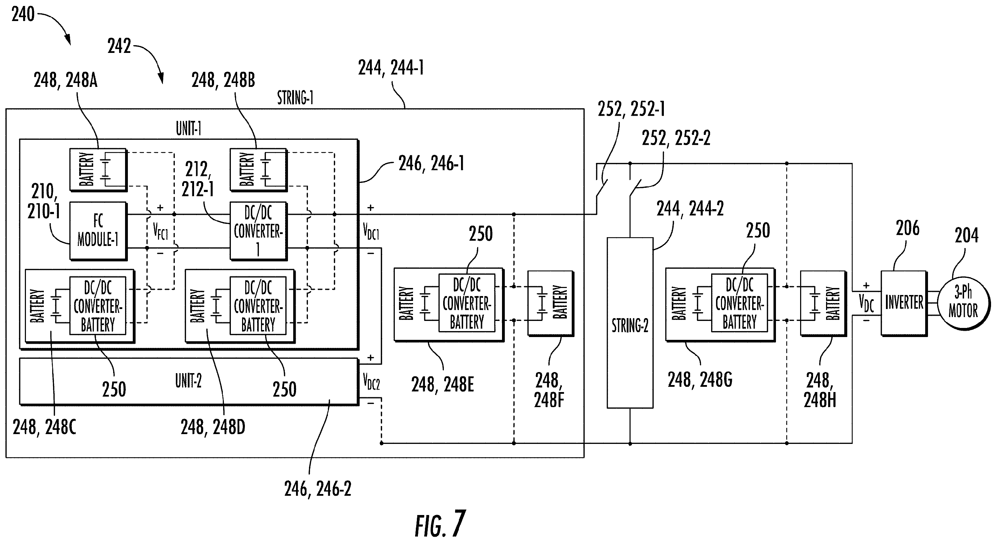

With reference to FIG. 7, another exemplary system 240 with a power source assembly 242 is shown. The power source assembly 242 includes a plurality of strings 244, and at least one of the plurality strings 244 includes a plurality of units 246 connected in series. Each unit 246 includes a fuel cell module 210, a DC/DC converter 212, and at least one battery module 248. As described above, the output from the fuel cell module 210 ramps up over time, and the battery module 248 supplements power to a load while the fuel cell module 210 ramps up. The unit 246 shown in FIG. 7 illustrates four battery modules 248A, 248B, 248C, 248D, and it will be appreciated that one or more of the battery modules 248 may be omitted. That is, the unit 246 may only have one battery module 248 in parallel with the fuel cell module 210 or the DC/DC converter 212. Each battery module 248 may include a dedicated, second DC/DC converter 250 to improve power transfer to the load while the fuel cell module 210 ramps up.

Additionally or alternatively, the string 244 may include a string battery module 248 in parallel with the plurality of units 246, shown in FIG. 7 as 248E and 248F. Yet alternatively or additionally, the power source assembly 242 may include an assembly battery module 248 in parallel with the plurality of strings 244, shown in FIG. 7 as 248G and 248H. The power source assembly 242 may include one, some, or all of the battery modules 248 to meet the power needs of the electric machine 204.

The power source assembly 242 may include at least one switch 252 between at least one of the plurality of strings 244 and the load. In particular, the power source assembly 242 may include a switch 252 for each of the plurality of strings 244. The switch 252 connects and disconnects the respective string 244 and the load. A controller (FIG. 12) can selectively actuate the respective switch 252 of specific ones of the plurality of strings 244 to provide a specified amount of power to the load. Additionally, the controller can open the respective switch 252 of a string 244 that is faulty or otherwise inoperable, isolating the string 244 from the rest of the power source assembly 242.

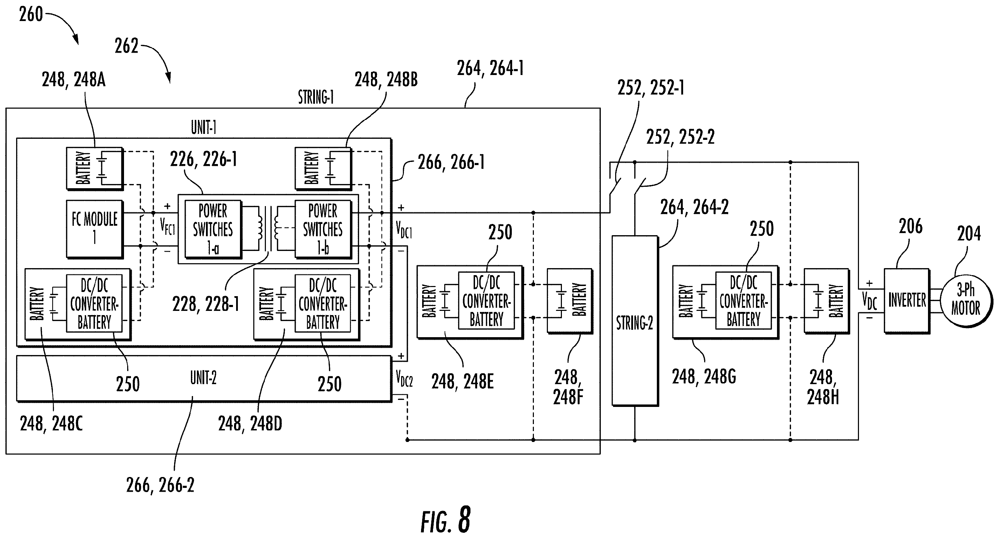

Now referring to FIG. 8, another exemplary system 260 with a power source assembly 262 is shown. The power source assembly 262 includes a plurality of strings 264, and each string 264 includes a plurality of units 266. As with the power source assembly 222 of FIG. 6, at least one of the units 266 of at least one of the strings 264 has a DC/DC converter 226 that includes a transformer 228 to isolate the fuel cell module 210 from the electric machine 204.

As with the power source assembly 242 of FIG. 7, the power source assembly 262 may include one or more battery modules 248. The transformer 228 isolates the battery modules 248 from the load when the battery modules 248 are connected to the fuel cell module 210.

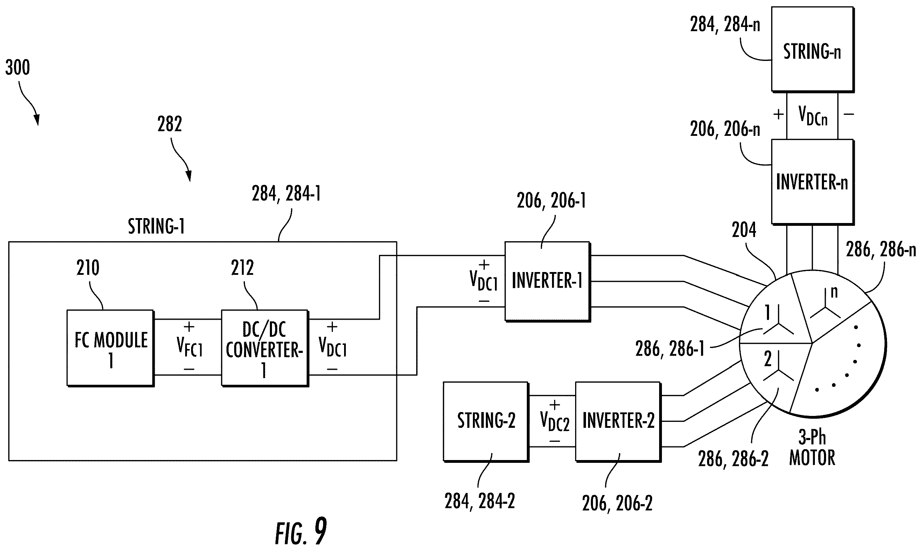

Now referring to FIG. 9, another exemplary system 280 with a power source assembly 282 is shown. The power source assembly includes a plurality of strings 284 and a plurality of inverters 206. For clarity, each string 284 of FIG. 9 shows only one fuel cell module 210 and one DC/DC converter 212, and it will be appreciated that the string 284 may include additional fuel cell modules 210, additional DC/DC converters 210, or other components shown in FIGS. 5-8, such as units 246 and battery modules 248.

In the example of FIG. 9, an electric machine 204 includes a plurality of windings 286, and each of the plurality of strings 284 is connected to one of the windings 286 with one of the plurality of inverters 206. In the example of FIG. 9, the electric machine 204 includes *n* windings, and the power source assembly 282 includes *n* strings 284, where *n* is a natural number. By connecting each string 284 to a specific one of the plurality of windings 286 with a dedicated inverter 206, the fuel cell modules 210 are further isolated from each other and power to the load is more readily controlled.

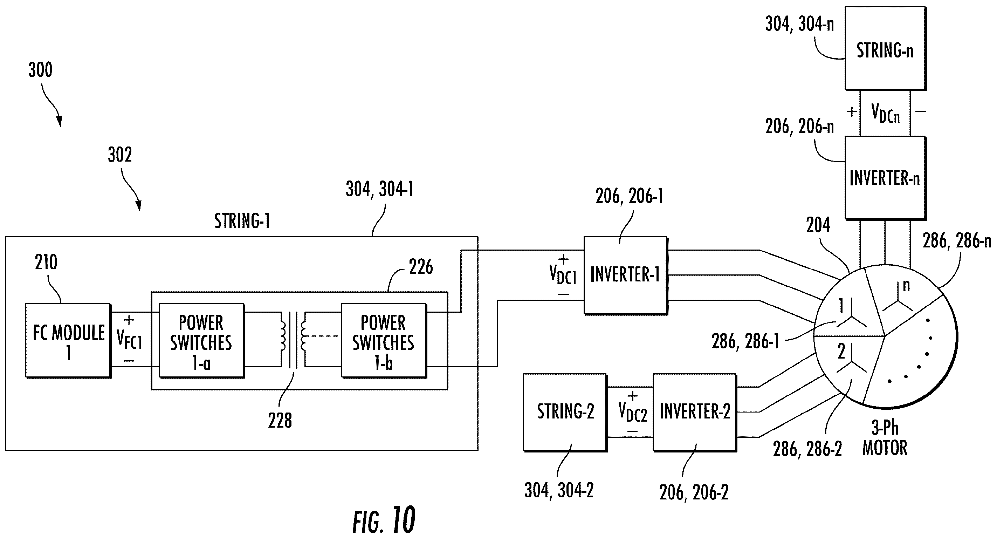

With reference to FIG. 10, another exemplary system 300 with a power source assembly 302 is shown. The power source assembly 302 of FIG. 10 includes a plurality of strings 304 connected to a plurality of windings 286 with a plurality of inverters 206, as with the power source assembly 282 of FIG. 9. At least one of the plurality of strings 304 of the power source assembly 302 includes a DC/DC converter 226 that includes a transformer 228 to isolate a fuel cell module 210 from the load. More specifically, the transformer 228 isolates the fuel cell module 210 from the respective one of the plurality of windings 286 to which the fuel cell module 210 is connected. It will be appreciated that the number *n* in FIGS. 9-10 may be a same number or a different number than the numbers *m, n* of FIG. 5. That is, the variables *m, n* are used to represent exemplary natural numbers and do not limit any particular embodiment to a number of any other embodiment.

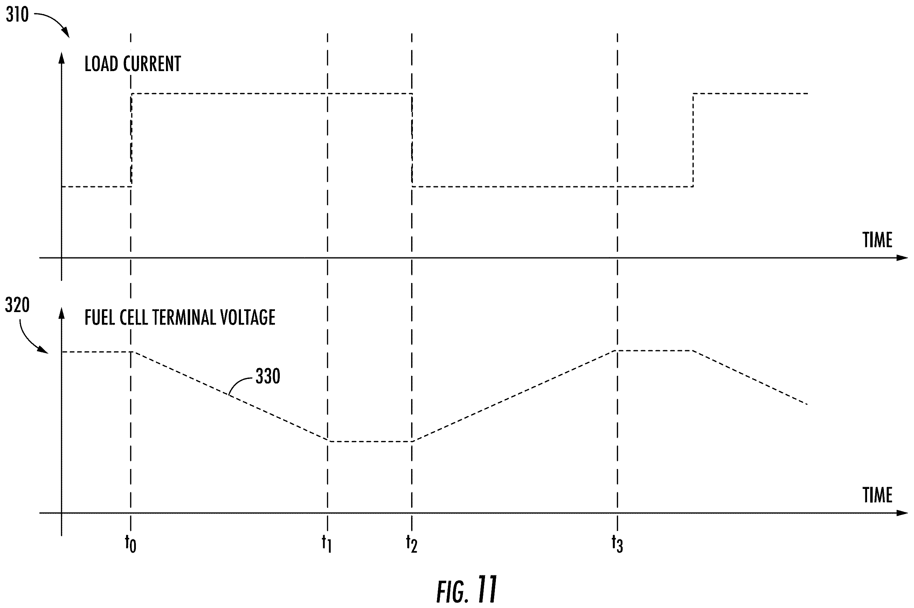

Now referring to FIG. 11, charts are shown illustrating how a power source assembly addresses a change in demand from a load (such as an electric machine 204) with power from a fuel cell module 210. The change in demand may be caused by a change in altitude, such as during takeoff or landing. A first chart 310 shows the change in the demand from the load, with a load current on the vertical axis, measured in amperes, and time on the horizontal axis, measured in seconds. A second chart 320 shows the change in terminal voltage from the fuel cell module 210, with the terminal voltage on the vertical axis, measured in volts, and time on the horizontal axis, measured in seconds. The horizontal axes of the first and second charts 310, 320 are aligned to illustrate how the fuel cell module 210 changes operation during the time frame of the change in demand from the load.

At a time t₀, the demand for current for the load increases, such as during a transition from ground operation to takeoff. The power source assembly 202 provides power to the load to meet the change in demand. Specifically, as shown in the second chart 320, the fuel cell module can decrease the terminal voltage over a specified period of time, as shown in the curve 330. Immediate decrease in the terminal voltage may cause adverse effects on the chemistry of the fuel cell module 210, ultimately reducing output and lifespan of the fuel cell module 210. By decreasing the terminal voltage over time from t₀ to t₁, the fuel cell module 210 can more readily provide power to the load without adverse effects. The power source assembly 202 uses the strings 208 to selectively actuate the fuel cell modules 210 so that the power demand of the load is met while ramping up output from each fuel cell module 210 over the specified period of time. To provide the current demanded by the load, one or more battery modules (such as the battery module 248) can provide additional current while the fuel cell module 210 ramps up output.

At a time t₂, the demand for current for the load decreases, such as a transition from takeoff to cruise. In response to the change in demand, the power source assembly 202 increases the terminal voltage for the fuel cell module 210. As shown in the curve 330, the power source assembly 202 can increase the terminal voltage of the fuel cell module 210 over a specified period of time, such as from the time t₂ to a time t₃. The gradual increase and decrease of the terminal voltage improves operation of the fuel cell modules 210, providing more consistent power output to the load while lowering stress on the fuel cell modules 210.

Now referring to FIG. 12, the operation of a controller 400, which may be used to control one or more components of the power source assemblies of FIGS. 5-10, will be described. In at least certain embodiments, the controller 400 can include one or more computing devices 402. The computing devices 402 can include one or more processors 402A and one or more memory devices 402B. The one or more processors 402A can include any suitable processing device, such as a microprocessor, microcontroller, integrated circuit, logic device, and/or other suitable processing device. The one or more memory devices 402B can include one or more computer-readable media, including, but not limited to, non-transitory computer-readable media, RAM, ROM, hard drives, flash drives, and/or other memory devices.

The one or more memory devices 402B can store information accessible by the one or more processors 402A, including computer-readable instructions 402C that can be executed by the one or more processors 402A. The instructions 402C can be any set of instructions that when executed by the one or more processors 402A, cause the one or more processors 402A to perform operations. In some embodiments, the instructions 402C can be executed by the one or more processors 402A to cause the one or more processors 402A to perform operations, such as any of the operations and functions for which the controller 400 and/or the computing devices 402 are configured, the operations for operating power source assemblies as described herein, and/or any other operations or functions of the one or more computing devices 402. The instructions 402C can be software written in any suitable programming language or can be implemented in hardware. Additionally or alternatively, the instructions 402C can be executed in logically and/or virtually separate threads on the one or more processors 402A. The one or more memory devices 402B can further store data 402D that can be accessed by the one or more processors 402A. For example, the data 402D can include data indicative of power flows, data indicative of engine/ aircraft operating conditions, and/or any other data and/or information described herein.

The computing devices 402 can also include a network interface 402E used to communicate, for example, with the other components of the power source assemblies, the vehicle incorporating the power source assemblies. For example, in the embodiment depicted, as noted above, the power source assemblies include one or more sensors for sensing data indicative of one or more parameters (e.g., power level, current level, voltage). The controller 400 is operably coupled to the one or more sensors through, e.g., the network interface, such that the controller 400 may receive data indicative of various operating parameters sensed by the one or more sensors during operation. In such a manner, the controller 400 may be configured to operate the power source assemblies in response to, e.g., the data sensed by the one or more sensors.

The network interface 402E can include any suitable components for interfacing with one or more networks, including for example, transmitters, receivers, ports, controllers, antennas, and/or other suitable components.

The technology discussed herein makes reference to computer-based systems and actions taken by and information sent to and from computer-based systems. One of ordinary skill in the art will recognize that the inherent flexibility of computer-based systems allows for a great variety of possible configurations, combinations, and divisions of tasks and functionality between and among components. For instance, processes discussed herein can be implemented using a single computing device or multiple computing devices working in combination. Databases, memory, instructions, and applications can be implemented on a single system or distributed across multiple systems. Distributed components can operate sequentially or in parallel.

As described herein, the plurality of strings in the electric circuit decouple the fuel cell modules from each other such that output from one of the fuel cell modules does not affect the other fuel cell modules. Such decoupling allows each individual fuel cell module to gradually ramp up output to provide current to the load. In such a form, the fuel cell modules can provide the specified power output to the electric propulsor without disruption or interference from the other fuel cell modules, improving operation of the aeronautical vehicle.

Further aspects are provided by the subject matter of the following clauses:

A power source assembly including a plurality of strings electrically connectable to a load, each of the plurality of strings including a fuel cell module and a DC/DC converter electrically connected to the fuel cell module, wherein each of the plurality of strings is arranged in parallel to each other of the plurality of strings.

The power source assembly of any of the preceding clauses, wherein each string includes a plurality of fuel cell modules including the fuel cell module and a plurality of DC/DC converters including the DC/DC converter, each of the plurality of DC/DC converters electrically connected to one of the plurality of fuel cell modules.

The power source assembly of any of the preceding clauses, wherein at least one of the plurality of strings includes a plurality of units connected in series, each of the plurality of units including one of the plurality of fuel cell modules and one of the plurality of DC/DC converters.

The power source assembly of any of the preceding clauses, wherein each of the plurality of units further includes a battery module.

The power source assembly of any of the preceding clauses, wherein each of the plurality of strings further includes a transformer electrically isolating the fuel cell module from the load.

The power source assembly of any of the preceding clauses, further including a battery module electrically connected to the load.

The power source assembly of any of the preceding clauses, wherein the battery module is in parallel to the plurality of strings.

The power source assembly of any of the preceding clauses, wherein the battery module is in parallel to the fuel cell module.

The power source assembly of any of the preceding clauses, wherein the battery module includes a second DC/DC converter.

The power source assembly of any of the preceding clauses, wherein each string further includes a transformer electrically isolating the fuel cell module from or the load.

The power source assembly of any of the preceding clauses, further including a switch between one of the plurality of strings and the load.

The power source assembly of any of the preceding clauses, wherein each fuel cell module is configured to increase or to decrease a terminal voltage over a specified period of time upon a change in demand of a load.

The power source assembly of any of the preceding clauses, wherein each fuel cell module is configured to increase or to decrease a terminal voltage over a specified period of time upon a change in altitude.

A system including an electric motor including a plurality of windings and a power source assembly including a plurality of strings electrically connected to a load, each of the plurality of strings including a fuel cell module and a DC/DC converter electrically connected to the fuel cell module, wherein each of the plurality of strings is in parallel to each other of the plurality of strings, wherein each of the plurality of strings is electrically connected to one of the plurality of windings.

The system of any of the preceding clauses, wherein each string includes a plurality of fuel cell modules including the fuel cell module and a plurality of DC/DC converters including the DC/DC converter, each of the plurality of DC/DC converters electrically connected to one of the plurality of fuel cell modules.

The system of any of the preceding clauses, wherein at least one of the plurality of strings includes a plurality of units connected in series, each of the plurality of units including one of the plurality of fuel cell modules and one of the plurality of DC/DC converters.

The system of any of the preceding clauses, wherein each of the plurality of strings further includes a transformer electrically isolating the fuel cell module from the load.

The system of any of the preceding clauses, further including a battery module electrically connected to the load.

The system of any of the preceding clauses, wherein the battery module is in parallel to the plurality of strings.

The system of any of the preceding clauses, wherein the battery module is in parallel to the fuel cell module.

The system of any of the preceding clauses, wherein the battery module includes a second DC/DC converter.

The system of any of the preceding clauses, wherein each of the plurality of strings is connected to one of the plurality of windings.

An aeronautical vehicle including the system of any of the preceding clauses.

This written description uses examples to disclose the present disclosure, including the best mode, and also to enable any person skilled in the art to practice the disclosure, including making and using any devices or systems and performing any incorporated methods. The patentable scope of the disclosure is defined by the claims, and may include other examples that occur to those skilled in the art. Such other examples are intended to be within the scope of the claims if they include structural elements that do not differ from the literal language of the claims, or if they include equivalent structural elements with insubstantial differences from the literal languages of the claims.

## Claims

1. A power source assembly comprising:
a plurality of strings electrically connectable to a load, each of the plurality of strings comprising:
a fuel cell module; and
a direct current (DC)/DC converter electrically connected to the fuel cell module,
wherein each of the plurality of strings is arranged in parallel to each other of the plurality of strings.

2. The power source assembly of claim 1, wherein each string comprises a plurality of fuel cell modules including the fuel cell module and a plurality of DC/DC converters including the DC/DC converter, each of the plurality of DC/DC converters electrically connected to one of the plurality of fuel cell modules.

3. The power source assembly of claim 2, wherein at least one of the plurality of strings includes a plurality of units connected in series, each of the plurality of units including one of the plurality of fuel cell modules and one of the plurality of DC/DC converters.

4. The power source assembly of claim 3, wherein each of the plurality of units further comprises a battery module.

5. The power source assembly of any preceding claim, wherein each of the plurality of strings further comprises a transformer electrically isolating the fuel cell module from the load.

6. The power source assembly of any preceding claim, further comprising a battery module electrically connected to the load.

7. The power source assembly of claim 6, wherein the battery module is arranged in parallel to the plurality of strings.

8. The power source assembly of claim 6, wherein the battery module is arranged in parallel to the fuel cell module.

9. The power source assembly of any of claims 6 to 8, wherein the battery module includes a second DC/DC converter.

10. The power source assembly of any preceding claim, further comprising a switch between one of the plurality of strings and the load.

11. The power source assembly of any preceding claim, wherein each fuel cell module is configured to increase or to decrease a terminal voltage over a specified period of time upon a change in demand of a load.

12. A system comprising:
an electric motor including a plurality of windings; and
a power source assembly comprising:
a plurality of strings electrically connected to a load, each of the plurality of strings comprising:
a fuel cell module; and
a DC/DC converter electrically connected to the fuel cell module,
wherein each of the plurality of strings is arranged in parallel to each other of the plurality of strings,
wherein each of the plurality of strings is electrically connected to one of the plurality of windings.

13. The system of claim 12, wherein each string comprises a plurality of fuel cell modules including the fuel cell module and a plurality of DC/DC converters including the DC/DC converter, each of the plurality of DC/DC converters electrically connected to one of the plurality of fuel cell modules.

14. The system of claim 13, wherein at least one of the plurality of strings includes a plurality of units connected in series, each of the plurality of units including one of the plurality of fuel cell modules and one of the plurality of DC/DC converters.

15. The system of any of claims 12to 14, wherein each of the plurality of strings further comprises a transformer electrically isolating the fuel cell module from the load.
